# EUROPEAN PATENT SPECIFICATION

(11) **EP 2 668 235 B1**
(45) Date of publication and mention of the grant of the patent: **29.07.2020**
(21) Application number: 12738776.9
(22) Date of filing: 27.01.2012
(51) Int. Cl.: C08L 69/00, C08L 33/04, C08K 5/053, C08G 64/04, B44C 3/02, C08G 18/44, C08G 18/71, C08G 18/42, C08L 33/10, C08K 3/08, C08K 3/34, C08K 5/00, C08L 33/06, C08L 67/02, C08L 75/04, C08L 91/00

(54) **POLYMER BLEND COMPOSITION BASED ON CARBON DIOXIDE AND ENVIRONMENT-FRIENDLY DECORATING MATERIALS PRODUCED THEREFROM**
POLYMERMISCHUNGSZUSAMMENSETZUNG AUF BASIS VON KOHLENDIOXID UND UMWELTFREUNDLICHE DEKORMATERIALIEN DARAUS
COMPOSITION DE MÉLANGE POLYMÈRE À BASE DE DIOXYDE DE CARBONE ET MATÉRIAUX DE DÉCORATION ÉCOLOGIQUES DÉRIVÉS

(30) Priority: 27.01.2011 KR 20110008032
(43) Date of publication of application: 04.12.2013
(73) Proprietor: SK Innovation Co., Ltd., Seoul 110-110 (KR)
(72) Inventor: PARK, Young Hyo, Daejeon 305-761 (KR); SON, In Hun, Daejeon 305-794 (KR); JUNG, Kang Min, Seongnam-si Gyeonggi-do 463-924 (KR); KIM , Jae Koo, Daejeon 305-742 (KR); CHUNG , Kwang Jin, Daejeon 305-761 (KR); OK, Myunq Ahn, Daejeon 305-500 (KR)
(74) Representative: Stolmár & Partner Patentanwälte PartG mbB
(86) International application number: PCT/KR2012/000622
(87) International publication number: WO 2012/102564

(56) References cited:
- WO-A1-2007/125039
- WO-A1-2010/034689
- WO-A2-2011/005664
- CN-A- 101 805 499
- CN-A- 101 831 165
- US-A- 4 137 280
- US-A- 4 303 759
- US-B2- 6 710 135

## Description

### Technical Field

The present invention relates to a method for producing an environment-friendly decorating material using a polyalkylene carbonate resin, and a polyalkylene carbonate resin composition for producing an environment-friendly decorating material capable of substituting for the existing polyvinyl chloride resin decorating material and other synthetic resin-based decorating material such as wallpaper, decoration sheet, interior sheet, flooring material, ceiling finish material, or the like, and producing a decorating material having excellent processability and workability.

### Background Art

The existing surface decorating materials, such as wallpaper, decoration sheet, interior sheet, flooring material, ceiling finish material, and the like, are mostly produced by using polyvinyl chloride (PVC) polymer, and they are mainly produced by coating a PVC resin on paper or fabric or extruding the PVC resin in a sheet form. However, since PVC contains chloride groups in a polymer chain thereof, dioxins classified as carcinogens or endocrine disruptors, or poisonous hydrogen chloride gas very resistant to corrosion may be generated at the time of burning PVC. Furthermore, most plasticizers necessarily added in PVC processing are defined as endocrine disruptors.

Furthermore, products produced by using PVC and synthetic resin are manufactured by using oil as raw materials, which results in continuous price increase due to depletion of oil resources, consumption of large energy during the manufacturing process, and large emission of greenhouse gas such as carbon dioxide or the like. Furthermore, in a case of landfill disposal, it takes 500 years or longer to biodegrade PVC, and as a result, generates harmful materials such as endocrine disruptors or harmful gas in a case of burning disposal, which results in serious environmental contamination. Therefore, environment-friendly products are being required in the long term.

Due to these requirements, polyalkylene carbonates including polypropylene carbonate and polyethylene carbonate, and copolymers thereof are being variously developed as polymers based on carbon dioxide. These products manufactured based on carbon dioxide are environment-friendly products, which can reduce 50% of petrochemical raw materials as compared with products manufactured based on the petrochemical raw materials, and do not generate harmful gas from the existing synthetic resin even at the time of burning. However, in a case of wallpaper processed by using this environment-friendly polyalkylene carbonate alone, the wallpaper shrinks at a room temperature and thus fails to retain an initial shape thereof.

Patent document CN101831165 discloses a fully-degradable composite sheet material prepared from a composition comprising poly (propylene carbonate) (88 kg), alkali lignin (10 kg), dibutyl phthalate (0.5 kg), diphenylmethane diisocyanate (0.3 kg), organotin (0.2 kg), 2,6-tertiary butyl-4-methylphenol (0.2 kg), triphenyl phosphite (0.2 kg), erucyl amide (0.3 kg), fine silica powder (0.1 kg), and citric acid (0.2 kg).

### Disclosure of Invention

### Technical Problem

An object of the present invention is to provide a polyalkylene carbonate resin composition for producing a decorating material, capable of exhausting no harmful materials at the time of production, process, and use of products, reducing significantly the amount of poisonous gas and pollutant generated at the time of burning and disposal of products, thereby being environment-friendly, and having excellent shape retention performance and dimensional stability at a high temperature, thereby substituting for the existing synthetic resin material.

### Solution to Problem

In order to solve the foregoing problems, according to the present invention a polyalkylene carbonate resin composition for producing a decorating material is defined in claim 1 and includes: 100 parts by weight of a base resin (A) consisting of 1 to 100 wt% of a polyalkylene carbonate resin (a1) and 0 to 99 wt% of a thermoplastic resin (a2);
based on the base resin,
0.01 to 20 parts by weight of a compatibilizer (B);
1 to 80 parts by weight of a plasticizer (C);
0.01 to 10 parts by weight of a crosslinking agent, a chain extender, or a mixture thereof (D);
0.01 to 5 parts by weight of a heat stabilizer (E); and
0.001 to 5 parts by weight of a processing aid (F).

Hereinafter, the present invention will be described in more detail.

The base resin of the polyalkylene carbonate resin composition for producing a decorating material according to the present invention includes a polyalkylene carbonate resin alone or a mixture of a polyalkylene carbonate and a thermoplastic resin. Here, the mixture may be 1 to 99 wt% of a polyalkylene carbonate resin and 1 to 99 wt% of a thermoplastic resin, or 20 to 95 wt% of a polyalkylene carbonate resin and 5 to 80 wt% of a thermoplastic resin.

The polyalkylene carbonate used in the present invention is prepared based on the description of Korean Patent Laid-open Publication Nos. 2008-0015454, 2009-0090154, 2010-067593, and 2010-0013255 filed by the present applicant. Alkylene includes ethylene, propylene, 1-butylene, cyclohexene, alkylglycidylether, n-butyl, n-octyl, and the like, and is not limited thereto.

The polyalkylene carbonate resin (a1) preferably has a high molecular weight, and the molecular weight thereof may be 10,000 to 1,000,000. If the molecular weight thereof is below 10,000, targeting physical properties (processability, mechanical properties, shape stability, and the like) cannot be obtained.

The thermoplastic resin (a2) can improve dimensional stability and heat resistance of a polyalkylene carbonate resin foam body. If the content thereof is below 1 wt%, it is difficult to achieve dimensional stability and heat resistance of decorating material products. Whereas, if the content thereof is above 99 wt%, it is difficult to exhibit properties of the polyalkylene carbonate resin.

As the thermoplastic resin, one or a mixture of two or more selected from the group consisting of polyethylene terephthalate glycol (PETG), polylactic acid, polyvinylacetate, polycaprolactone, polymethylmethacrylate, polyethylene vinylacetate copolymer (EVA), polyethylenemethylacrylate glycidylmethacrylate copolymer, polyethylene, polypropylene, and copolyester of Chemical Formula 1 below. 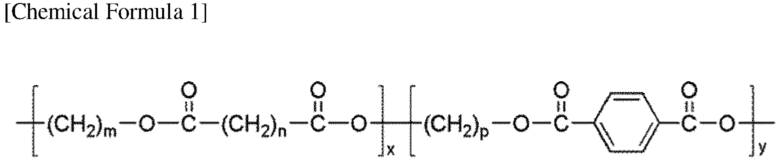 wherein m represents an integer of 2 to 10, n represents an integer of 0 to 18; p represents an integer of 2 to 10, and v, w, x and y each represent an integer of 0 to 100.

In order to increase the compatibility between the polyalkylene carbonate resin (a1) and the polymer additive (a2) in the base resin (A), the compatibilizer (B) is used in a content of 00.1 to 20 parts by weight based on 100 parts by weight of the base resin (A).

Here, the compatibilizer includes low-molecular weight poly(alkylene)carbonate or polyalkylene carbonate copolymer, which may have a weight average molecular weight of 500 to 1,000,000 g/mol.

The plasticizer (C) is used to improve flowability and processability at the time of processing the composition, and a glycol-based plasticizer or a glycerin-based plasticizer are used alone or mixedly, as the plasticizer (C). As the glycol-based plasticizer, a neopentyl glycol, or a diethylene glycol-based or triethylene glycol-based compound, which has no endocrine disruptors and is advantageous in transparency, is used. For example, Difatty-101 of DAIHACHI (Japan), or LGflex EBNW of LG CHEMICAL (Korea), may be used. Acetylated monoglyceride is used as the glycerin-based plasticizer, which is another plasticizer. For example, Rikemal PL-012, RikemalPL-019, or Rikema LG-1, of Riken Vitamin (Japan) may be used. And epoxidized soybean oil derived from natural plant, epoxidized linseed oil, epoxides of other plants, chlorinated hydrocarbon, trimellitate, and a phosphate-base plasticizer are used.

The input of the crosslinking agent, chain extender, or the mixture (D) thereof can increase melt viscosity of the polyalkylene carbonate resin and the thermoplastic resin and obtain the decorating material in a stable form during the manufacture, and thus, is included in constitution of the present invention. Here, the use content of the crosslinking agent, chain extender, or the mixture thereof is in the range of 0.01 to 10 parts by weight based on 100 parts by weight of the base resin. If the content thereof is below 0.01 parts by weight, the use thereof is ineffective, and if the content thereof is above 10 parts by weight, the melt viscosity of the mixture is too high to process.

As the crosslinking agent, one or a mixture of two or more selected from the group consisting of 2,4-tolylene diisocyanate, 2,6-tolylene diisocyanate, 4,4'-diphenylmethane diisocyanate, m-phenylene diisocyanate, xylene diisocyanate, tetramethylene diisocyanate, hexamethylene diisocyanate, lysine diisocyanate, 1,4-cyclohexylene diisocyanate, 4,4'-dicyclohexylmethane diisocyanate, 3,3'-dimethyl-4,4'-biphenylene diisocyanate, N-[p-maleimidophenyl] diisocyanate, 1,6-hexamethylene diisocyanate and isophorone diisocyanate may be used.

As the chain extender, one or a mixture of two or more selected from the group consisting of ethylene glycol, 1,4-butanediol, 1,5-pentanediol, 1,6-hexanediol, 1,10-decanediol, 2,2-dimethyl-1,3-propanediol, 1,3-propanediol, trimethylpropanol, bisphenol, polyesterdiol, polyetherdiol, polycaprolactonediol and polycarbonatediol are used. The crosslinking agent and the chain extender may be used in combination.

The heat stabilizer (E) is used to protect the composition from thermal decomposition, which may occur during processing of the materials, and is included in the composition in a content of 0.01 to 5 parts by weight based on 100 parts by weight of the base resin. If the content thereof is below 0.01 parts by weight, addition thereof is ineffective, and if the content thereof is above 5 parts by weight, it is difficult to achieve thermal stability thereof.

As the heat stabilizer, one or a mixture of two or more selected from the group consisting of phenol-based, hydroquinone-based, benzyl alcohol-based, quinine-based, and amine-based compounds are used. Specifically, one or a mixture of two or more selected from the group consisting of phenothiazine, p-methoxyphenol, cresol, benzhydrol, 2-methoxy-p-hydroquinone, 2,5-di-tert-butylquinone, and diisopropylamine may be used.

The processing aid (F) functions to impart an appropriate release property to the composition at the time of processing the material and improve all the physical properties of the composition such as surface smoothness and heat resistance, and included in the composition in a content of 0.001 to 5 parts by weight based on 100 parts by weight of the base resin. If the content thereof is below 0.001 parts by weight, the composition may stick to a surface of a processing equipment. Whereas, if the content thereof is above 5 parts by weight, a large amount of processing aid may be transferred to the outside of the composition.

The processing aid is one or a mixture of two or more selected from the group consisting of stearic acid; phosphoric acid; phosphorous acids including 3,5-di-t-butyl-4-hydroxybenzylphosphonic acid; phosphorous acid esters including triphenylphosphate, trimethylphosphate, triisodecylphosphate, and tri-(2,4-di-t-butylphenyl)phosphate; phosphorous compounds including hypophosphorous acid and polyphosphoric acid; acidic phosphoric acid esters including methylphosphate, dibutylphosphate, and monobutylphosphate.

The polyalkylene carbonate resin composition of the present invention having the above constitution is excellent in shape retention performance at high temperature and in processability and dimensional stability, and good in workability. In addition, the polyalkylene carbonate resin composition of the present invention exhausts no harmful materials at the time of construction and use of the products, and also, significantly reduces the amount of pollutant materials generated at the time of burning and disposal of the products, thereby having environment-friendly characteristics.

The polyalkylene carbonate resin composition for producing a decorating material according to the present invention may further include an inorganic material (G), an impact reinforcement agent (H), a foaming agent (I), a foaming aid (J), a foam stabilizer (K), a flame retardant agent (L), a natural material reinforcement agent (M), or a mixture thereof.

The inorganic material (G) is used to impart shape stability and improvement in heat resistance of the decorating material, and is included in the content of 0.01 to 200 parts by weight based on 100 parts by weight of the base resin. If the content thereof is below 0.01 parts by weight, addition thereof is ineffective. Whereas, if the content thereof is above 200 parts by weight, the processability thereof is deteriorated.

As the inorganic material, one or a mixture of two or more selected from the group consisting of ceramic particles including calcium carbonate, titanium dioxide, talc, kaolin, wollastonite, and mica, and metals including titanium (Ti), lead (Pb), barium (Ba), silicon (Si), tin (Sn), calcium (Ca), magnesium (Mg), aluminum (Al), niobium (Nb), zirconium (Zr), iron (Fe), tungsten (W), vanadium (V), manganese (Mn), cobalt (Co), nickel (Ni), zinc (Zn), and rare metal elements may be used.

The impact reinforcement agent (H) is used to further improve impact resistance, and may be further included in the content of 0.01 to 20 parts by weight based on 100 parts by weight of the base resin. If it is used in a content of below 0.01 parts by weight, impact reinforcement effect is deteriorated. Whereas if it is used in the content of above 20 parts by weight, scratch resistance property and flame retardant property may be deteriorated.

As the impact reinforcement agent, one or more selected from the group consisting of core-shell structure copolymer, chain structure reinforcement agent, thermoplastic olefin elastomer (TPO), thermoplastic vulcanizate (TPV), thermoplastic polyurethane (TPU), and thermoplastic polyester-ether elastomer (TPEE) may be used. The core-shell structure copolymer may have a structure where unsaturated monomers selected from the group consisting of alkyl(meth)acrylate, (meth)acrylate, acid anhydride, alkyl or phenyl nucleus-substituted maleimide, and a combination thereof is grafted onto a core made of rubber selected from the group consisting of diene-based rubber, acryl-based rubber, silicon-based rubber, and a combination thereof to form a shell, and thermoplastic polyester-ether elastomer (TPEE) may be thermoplastic polyurethane prepared by reacting glycol of polyester or polyether and diisocyanate, or thermoplastic polyester-ether elastomer (TPEE) prepared by copolymerization of polyester and glycol of polyester or polyether.

The kind of the foaming agent (I) usable in the present invention may include any one that is generally used in the art without particular limitation. The foaming agent is used to impart elasticity to the composition and increase the foaming effect at the time of producing the decorating material, and may be included in the composition in a content of 0.01 to 10 parts by weight based on 100 parts by weight of the base resin. If the content thereof is below 0.01 parts by weight, there is no foaming effect. Whereas, if the content thereof is above 30 parts by weight, it is difficult to expect further foaming effect.

Examples of the foaming agent may include azodicarbonamide, azodiisobutyronitrile benzenesulfonyl-hydrazide, 4,4-oxybenzenesulfonyl-semicarbazide, p-toluene sulfonyl semicarbazide, barium azodicarboxylate, N,N'-dimethyl-N,N'-dinitrosoterephthalamide, trihydrazinotriazine, sodium bicarbonate, potassium bicarbonate, ammonium bicarbonate, sodium carbonate, and ammonium carbonate.

In addition, as the physical foaming agent, an inorganic foaming agent, such as carbon dioxide, nitrogen, argon, water, air, helium, or the like, or an organic foaming agent, such as aliphatic hydrocarbon containing 1 to 9 carbon atoms, aliphatic alcohol containing 1 to 3 carbon atoms, halogenated aliphatic hydrocarbon containing 1 to 4 carbon atoms, or the like may be used.

Specific examples of the foaming agent usable in the present invention may include methane, ethane, propane, normal butane, isobutane, normal pentane, isopentane, neopentane and the like, as the aliphatic hydrocarbon; methanol, ethanol, normal propanol, isopropanol and the like, as aliphatic alcohol; and one or a mixture of two or more selected from the group consisting of methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), 1,1,1,3,3-pentafluorobutane (HFC-365mfc), 1,1,1,3,3-pentafluoropropane (HFC-13245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoro ethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), dichlorotetrafluoroethane (CFC-114), chloroheptafluoropropane, and dichlorohexafluoropropane, as halogenated aliphatic hydrocarbon.

The foaming aid (J) usable in the present invention controls decomposition temperature and foaming rate of the foaming agent, thereby increasing productivity and energy efficiency, and may be included in a content of 0.01 to 10 parts by weight based on 100 parts by weight of the base resin. If the content thereof is below 0.01 parts by weight, decomposition temperature of the foaming agent is raised. Whereas, if the content thereof is above 10 parts by weight, the foaming rate is very fast, thereby preventing foam cells from being uniformly generated.

The foaming aid may include any one that is generally used in the art without particular limitation, but it is preferable to select appropriate decomposition promoters, in consideration that the foaming aid chemically reacts with a foaming agent, a crosslinking agent, and other additives to incur color change or influence foaming conditions. Generally, examples of the foaming aid may include one or a mixture of two or more selected from the group consisting of surface treated urea, zinc p-toluene sulfinate, and zinc derivatives, as an organic-based or organometal-based chemical material.

The foaming stabilizer (K) usable in the present invention functions to prevent cells generated inside the decorating material composition from being united or broken, and controls to form uniform cells, and may be included in the composition in a content of 0.01 to 10 parts by weight based on 100 parts by weight of the base resin. If the content thereof is below 0.01 parts by weight, foam may not be uniformly formed. Whereas, if the content thereof is above 10 parts by weight, the foam forming rate slows.

The foaming stabilizer may include any one that is generally used in the art without particular limitation, but it is preferable to use organic silicon-based foaming stabilizers having excellent dispersibility, and more preferable to use a mixture of two or more selected from silicon oil, derivatives thereof, and the like, in the organic silicon-based foaming stabilizers.

The flame retardant agent (L) is used to impart flame retardancy or improve heat resistance, and examples thereof are particularly not limited. Specifically, one or more selected from the group consisting of phosphor-based flame retardant agents, nitrogen compound-based flame retardant agents, silicon-based flame retardant agents, inorganic-based flame retardant agents, melamine-based flame retardant agents, and halogen-based flame retardant agents may be used.

The phosphor-based flame retardant agent may include common flame retardant agent containing phosphor. Specific examples thereof may include phosphate, phosphonite, phosphinate, phosphine oxide, phosphazene, and metal salts thereof, but is not necessarily limited thereto.

Example of the nitrogen compound-based flame retardant agent may include aliphatic amine compounds, aromatic amine compounds, nitrogen-containing heterocyclic compounds, cyan compounds, aliphatic amides, aromatic amides, urea, and thiourea.

Example of the silicon-based flame retardant agent may include silicon resin or silicon oil. Example of the silicon-based resin includes a resin having a three-dimensional net structure where RSiO_{3/2}, RSiO, or RSiO_{1/2} units can be combined. Wherein R represents an alkyl group having 1 to 10 carbon atoms such as methyl, ethyl, propyl, or the like, an aromatic group, or a substitution group in which a vinyl group is contained in each of the above substitutions. Examples of the silicon oil may include modified polysiloxane where at least one methyl group of polydimethyl siloxane or a side chain or a terminal of the polydimethyl siloxane is modified by one selected from the group consisting of hydrogen, alkyl, cyclohexyl, phenyl, benzyl, epoxy, polyether, carboxyl, mercapto, chloroalkyl, alkyl alcohol ester, alcohol, allyl, vinyl, trifluoromethyl, and a combination thereof.

Examples of the inorganic flame retardant agent may include silicate dioxide (SiO₂), magnesium hydroxide, aluminum hydroxide, antimony trioxide, antimony pentoxide, antimony, sodium carbonate, hydroxy-tartaric acid zinc, tartaric acid zinc, meta-tartaric acid tin oxide, tin oxide salt, zinc sulfate, ferrous oxide, ferric oxide, tin oxide, tin dioxide, zinc borate, calcium borate, ammonium borate, ammonium octa-molybdate, metal salts of tungsten acid, composite compound of tungsten and metalloid, zirconium-based compounds, guanidine-based compounds, graphite, talc, expandable graphite, and the like.

Examples of the melamine-based flame retardant agent may include melamine phosphate, dimelamine phosphate, melamine pyrophosphate, or melamine cyanurate.

Any halogen-based compound that can function as a flame retardant agent may be used as the halogen-based flame retardant agent without limitation. For example, a commercialized halogen-based flame retardant agent, such as, decabromo diphenyl ether, decabromo diphenyl ethane, decabromo bisphenol-A, tetrabromo bisphenol-A epoxy oligomer, octabromo trimethyl phenylindane, ethylene-bis-tetrabromophthalimide, tris(tribromophenyl)triazine, polystyrene bromide, may be used.

The flame retardant agent may be further included in the composition in a content of 0.01 to 200 parts by weight based on 100 parts by weight of the base resin. If the content thereof is below 0.01 parts by weight, a flame retardant effect is difficult to obtain. Whereas, if the content thereof is above 200 parts by weight, physical properties, such as, impact strength and the like, may be largely deteriorated.

The natural material reinforcement agent (M) is used to improve shape stability and heat resistance of the decorating material composition and impart far-infrared radiation and elasticity to the decorating material composition, and may further included in the composition in a content of 0.01 to 10 parts by weight based on 100 parts by weight of the base resin. If the content thereof is below 0.01 parts by weight, addition thereof is ineffective. Whereas, if the content thereof is above 100 parts by weight, the processability thereof is deteriorated.

The natural material reinforcement agent may include one or a mixture of two or more selected from a natural fiber of hemp, flax, ramie, kenaf, or jute, a short cellulose of wood flour, cotton, or wool waste, a pulp cellulose, bamboo, natural dried grass, illite, elvan, jade, loess, clay, tourmaline, kiyoseki, sericite, natural cork, wood flour, rice hull, charcoal, green tea, natural rubber, epoxy-modified natural rubber, natural wormwood, shells, banana fiber, cactus fiber, palm oil and palm oil residues, red ginseng powder, ginseng powder, chaff powder, yellow soil ball, ceramic ball, camphor tree, magnetic powder, natural flavor microcapsules, laurinoxylon, artificial pearls, natural pearls, gold, silver, violet quartz, soil, white quartz, petrifaction and other jewelry and fossils.

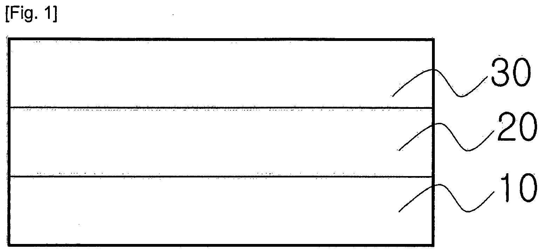

FIG. 1 is a view for illustrating an environment-friendly decorating material (wallpaper, interior sheet) according to a preferred embodiment of the present invention. As shown in FIG. 1, an environment-friendly decorating material according to the present invention includes a base sheet 10, and a polyalkylene carbonate resin-containing resin layer 20 formed on the base sheet 10.

As the base sheet 10, any one that is generally known in the art may be used without particular limitation, and for example, a base sheet used in the manufacture of the existing silk wallpaper may be used. Examples of this base sheet may include, but are not limited to, vellum paper, flame retardant paper, non-woven fabric (e.g., polyester/ pulp composite non-woven fabric), woven fabric, glass fiber fabric, flame retardant fabric, and other textile fabrics.

The base sheet preferably has a basis weight of 80 g/m² to 200 g/m². Here, if the basis weight thereof is below 80 g/m², wallpaper may be torn or damaged during a constructing or using procedure. Whereas, if the basis weight thereof is above 200 g/m², construction-related problems such as heaviness, cracking, curling, and the like may occur.

The thickness of the base sheet is determined depending on the use of wallpaper, and not particularly limited. In general, the base sheet preferably has a thickness of 0.1 mm to 0.3 mm.

The environment-friendly decorating material of the present invention may further include a print layer 30 formed on the resin layer 20. The print layer 30 is further formed to impart various designs and/or colors to wallpaper, thereby further improving fine view. Here, the method of forming the print layer is particularly not limited. For example, the print layer may be formed by using the known printing methods, such as gravure printing, transfer printing, digital printing, or rotary printing.

In addition, in the environment-friendly decorating material of the present invention, an embossing pattern layer may be further formed on the resin layer 20 and/or the print layer 30, which can impart further three-dimensional effects to the decorating material. The method of forming this embossing pattern layer is particularly not limited. For example, the embossing pattern layer may be formed by rolling the resin layer or the print layer with a roller with patterns, or making the resin layer have an appropriate foaming agent therein and then passing through the known foaming and gelling procedures.

The present invention provides a method for producing an environment-friendly decorating material, which includes forming a resin layer by using a polyalkylene carbonate resin composition for producing the decorating material described earlier before the base sheet.

As for the method for producing the environment-friendly decorating material, a method of forming the resin layer using the polyalkylene carbonate resin composition is particularly not limited, but a method may be used that the above-described polyalkylene carbonate resin composition is blended with an appropriate solvent or a plasticizer and then the blended material is coated on the base sheet by using the known unit such as a knife coater, a roll coater, and the like.

The polyalkylene carbonate resin may be coated on the base sheet by manufacturing a film or a sheet from the polyalkylene carbonate resin composition through extrusion molding or blow molding and then binding the manufactured film or sheet to the base sheet. More preferably, the film or sheet is manufactured from the polyalkylene carbonate resin composition through a t-die extrusion method, and then formed on the base sheet.

The coating procedure can impart a predetermined tension to the base sheet, and thus, maintain the base sheet flat, thereby allowing an efficient coating process. Here, a method of imparting the tension to the base sheet may employ an edge point control (EPC) machine, and is not limited thereto. As such, according to the present invention, a resin composition is coated on a base sheet, and then this resultant structure is dried under the known condition, thereby forming a resin layer.

The present invention may further include a process of forming the print layer on the resin layer, after forming the resin layer on the base sheet by using the above-described polyalkylene carbonate resin composition. Here, the method of forming the print layer may use the known method, such as, gravure printing, transfer printing, digital printing, screen printing, or rotary printing, but is not limited thereto. This print layer may be performed directly after forming the above-described resin layer, or after performing the foaming and gelling process of the resin layer or the forming process of embossing patterns.

The embossing process of imparting the embossing patterns to the resin layer may be further performed before or after forming the print layer. This embossing process can impart more three-dimensional effects to the resin layer. A method of performing this embossing process may be performed by adding an additive such as a foaming agent into the resin layer, and then performing a foaming and gelling process or a rolling process using a roll with embossing patterns, but is not limited thereto.

In the procedure of forming the embossing patterns using the roll, a pressing roller or a steel roller may be used as the roller. During the rolling process, left and right pressures of the roller are equally controlled, which is preferable in view of minimizing left and right thickness deviation of a product. However, the above procedure is not limited thereto.

### Advantageous Effects of Invention

As set forth above, the polyalkylene carbonate resin composition for producing a decorating material according to the present invention is excellent in shape retention performance at high temperature and good in heat stability, dimensional stability, and processability, and can provide an environment-friendly decorating material product because it does not generate harmful materials at the time of construction or use and the amount of harmful gas and pollutant materials is largely reduced.

### Brief Description of Drawings

The above and other objects, features and advantages of the present invention will become apparent from the following description of preferred embodiments given in conjunction with the accompanying drawings, in which:
FIG. 1 shows an environment-friendly decorating sheet according to a preferred embodiment of the present invention.

### [Detailed Description of Main Elements]

10 : base sheet
20 : resin layer
30 : print layer

### Mode for the Invention

Hereinafter, the present invention will be described in detail with reference to the following examples.

Hereinafter, physical properties were measured by the following methods.

### <Heat-resistant temperature test>

An upper limit temperature at which deformation of a decorating material does not occur and an initial shape and dimensional stability of the decorating material are maintained for a predetermined time period was measured.

### <Roll processability test>

A composition for a decorating material was processed for 10 minutes by using a Roll Mixer, and then roll processability was measured by naked eye, observing whether the composition adheres to a roll or not, whether the composition is transferred to the outside or not, and external appearance of a molded sheet, and evaluating the observed results according to the scores of 1 to 5 (1: very inferior ~ 5: very excellent).

### <Flame retardant property test>

A flame retardant property of a decorating material was measured according to the flame retardant property test of KSM 7305. An after flame time, an after glow time, a carbonized area, smoke density and the like were measured after 60 seconds.

### [Comparative Example 1]

Based on 100 parts by weight of polypropylene carbonate having a molecular weight of 150,000 as a base resin, 20 parts by weight of Difatty 101 (DAIHACHI Company), 0.1 parts by weight of a heat stabilizer (Songnox 1076, Songwon Industry), and 80 parts by weight of CaCO₃ were mixed. The mixture was extruded by a twin screw extruder to mold a pellet, and then the pellet thus obtained was coated on paper to produce a decorating material. Processability, dimensional stability, and flame retardant property of the decorating material were measured, and the measured results were tabulated in Table 1.

### [Comparative Example 2]

Based on 100 parts by weight of a polyvinlylchloride resin (Formosa Company) having a molecular weight of 70,000 as a base resin, 80 parts by weight of dioctyl-phathalate (DOP), 80 parts by weight of CaC0₃, 2 parts by weight of ZnO were mixed by using a mixer. The mixture was coated on paper to produce a decorating material. Processability, dimensional stability, and flame retardant property of the decorating material were measured, and the measured results were tabulated in Table 1.

### [Comparative Example 3]

Based on 100 parts by weight of a polyvinlylchloride resin (Formosa Company) having a molecular weight of 70,000 as a base resin, 70 parts by weight of phosphor-based flame retardant agent (Reofos65), 40 parts by weight of Al(OH)₃ (aluminum trihydroxide), 40 parts by weight of a composite flame retardant agent, 80 parts by weight of CaC0₃, and 2 parts by weight of ZnO were mixed. The mixture was coated on paper to produce a decorating material. Processability, dimensional stability, and flame retardant property of the decorating material were measured, and the measured results were tabulated in Table 1.

### [Example 1]

Based on 100 parts by weight of a base resin consisting of 80 wt% of polypropylene carbonate having a molecular weight of 150,000 and 20 wt% of poly(butylene adipate-co-terephthalate) (PBAT) having a molecular weight of 100,000, 1 part by weight of a polypropylene carbonate compatibilizer (polypropylene carbonate copolymer, molecular weight 150,000, SK Energy Company), 20 parts by weight of Difatty 101(DAIHACHI Company), 0.5 parts by weight of N-[p-maleimidophenyl]isocyanate (PMPI), 100 parts by weight of CaC0₃, 0.1 parts by weight of a heat stabilizer (Songnox 1076, Songwon Industry), 10 parts by weight of titanium dioxide, and 2 parts by weight of stearic acid were mixed. The mixture was extruded by a twin screw extruder to mold a pellet, and then the pellet thus obtained was coated on paper to produce a decorating material. Processability, dimensional stability, and flame retardant property of the decorating material were measured, and the measured results were tabulated in Table 1.

### [Example 2]

Based on 100 parts by weight of a base resin consisting of 80 wt% of polypropylene carbonate having a molecular weight of 150,000 and 20 wt% of poly(butylene adipate-co-terephthalate) (PBAT) having a molecular weight of 100,000, 1 part by weight of a polypropylene carbonate compatibilizer (polypropylene carbonate copolymer, molecular weight 150,000, SK Energy Company), 20 parts by weight of Difatty 101(DAIHACHI Company), 0.5 parts by weight of N-[p-maleimidophenyl]isocyanate (PMPI), 100 parts by weight of CaC0₃, 0.1 parts by weight of a heat stabilizer (Songnox 1076, Songwon Industry), 10 parts by weight of titanium dioxide, 2 parts by weight of stearic acid, 4 parts by weight of a foaming agent (AC 1000, Keumyang Chemical) were mixed. The mixture was extruded by a twin screw extruder to mold a pellet, and the pellet thus obtained was coated on paper, followed by foaming in an oven at 190°C for 3 minutes, to produce a decorating material. Processability, dimensional stability, and flame retardant property of the decorating material were measured, and the measured results were tabulated in Table 1.

### [Example 3]

Based on 100 parts by weight of a base resin consisting of 80 wt% of polypropylene carbonate having a molecular weight of 150,000 and 20 wt% of poly(butylene adipate-co-terephthalate) (PBAT) having a molecular weight of 100,000, 20 parts by weight of a phosphor-based flame retardant agent (FP 600, ADEKA Company), 130 parts by weight of Al(OH)₃ (aluminum trihydroxide), 1 part by weight of a polypropylene carbonate compatibilizer (polypropylene carbonate copolymer, molecular weight 150,000, SK Energy Company), 0.5 parts by weight of N-[p-maleimidophenyl]isocyanate (PMPI), 100 parts by weight of CaCO₃, 0.1 parts by weight of a heat stabilizer (Songnox 1076, Songwon Industry), 10 parts by weight of titanium dioxide, 2 parts by weight of stearic acid were mixed. The mixture was extruded by a twin screw extruder to mold a pellet, and then the pellet thus obtained was coated on paper to produce a decorating material. Processability, dimensional stability, and flame retardant property of the decorating material were measured, and the measured results were tabulated in Table 1.

### [Example 4]

Based on 100 parts by weight of a base resin consisting of 80 wt% of polypropylene carbonate having a molecular weight of 150,000 and 20 wt% of poly(butylene adipate-co-terephthalate) (PBAT) having a molecular weight of 100,000, 20 parts by weight of a phosphor-based flame retardant agent (FP 600, ADEKA Company), 130 parts by weight of Al(OH)₃(aluminum trihydroxide), 1 part by weight of a polypropylene carbonate compatibilizer (polypropylene carbonate copolymer, molecular weight 150,000, SK Energy Company), 0.5 parts by weight of N-[p-maleimidophenyl]isocyanate (PMPI), 100 parts by weight of CaC0₃, 0.1 parts by weight of a heat stabilizer (Songnox 1076, Songwon Industry), 10 parts by weight of titanium dioxide, 2 parts by weight of stearic acid, and 4 parts by weight of a foaming agent (AC 1000, Keumyang Chemical) were mixed. The mixture was extruded by a twin screw extruder to mold a pellet, and then the pellet thus obtained was coated on paper, followed by foaming in an oven at 190°C for 3 minutes, to produce a decorating material. Processability, dimensional stability, and flame retardant property of the decorating material were measured, and the measured results were tabulated in Table 1.

### [Example 5]

Based on 100 parts by weight of a base resin consisting of 50 wt% of polypropylene carbonate having a molecular weight of 150,000 and 50 wt% of PLA(3251D, Natureworks), 1 part by weight of a polypropylene carbonate compatibilizer (polypropylene carbonate copolymer, molecular weight 150,000, SK Energy Company), 20 parts by weight of Difatty 101 (DAIHACHI Company), 0.5 parts by weight of N-[p-maleimidophenyl]isocyanate (PMPI), 100 parts by weight of CaC0₃, 0.1 parts by weight of a heat stabilizer (Songnox 1076, Songwon Industry), 10 parts by weight of titanium dioxide, and 2 parts by weight of stearic acid were mixed. The mixture was sheet-processed by a twin screw extruder, and then this sheet was used to produce a decorating material. Processability, dimensional stability, and flame retardant property of the decorating material were measured, and the measured results were tabulated in Table 1.

### [Example 6]

Based on 100 parts by weight of a base resin consisting of 50 wt% of polypropylene carbonate having a molecular weight of 150,000 and 50 wt% of PLA(3251D, Natureworks), 1 part by weight of a polypropylene carbonate compatibilizer (polypropylene carbonate copolymer, molecular weight 150,000, SK Energy Company), 20 parts by weight of Difatty 101(DAIHACHI Company), 0.5 parts by weight of N-[p-maleimidophenyl]isocyanate (PMPI), 0.1 parts by weight of a heat stabilizer (Songnox 1076, Songwon Industry), 2 parts by weight of stearic acid, and 120 parts by weight of a natural material reinforcement agent mixture (100 parts by weight of wood flour, 10 parts by weight of elvan, and 10 parts by weight of yellow soil) were mixed. The mixture was sheet-processed by a twin screw extruder, and then this sheet was used to produce a decorating material. Processability, dimensional stability, and flame retardant property of the decorating material were measured, and the measured results were tabulated in Table 1.

**[Table 1]**

| | | Unit | Compar ative Example 1 | Comparative Example 2 | Comparative Example 3 | Example 1 | Example 2 | Example 3 | Example 4 | Example 5 | Example 6 |
|---|---|---|---|---|---|---|---|---|---|---|---|
| (A) Base Resin | PPC | Wt% | 100 | 0 | 0 | 80 | 80 | 80 | 80 | 50 | 50 |
| | PBAT | Wt% | 0 | 0 | 0 | 20 | 20 | 20 | 20 | 0 | 0 |
| | PLA | Wt% | 0 | 0 | 0 | 0 | 0 | 0 | 0 | 50 | 50 |
| | PVC | Wt% | 0 | 100 | 100 | 0 | 0 | 0 | 0 | 0 | 0 |
| Plasticizer (DCP) | | Parts By Weight | 0 | 80 | 80 | 0 | 0 | 0 | 0 | 0 | 0 |
| ZnO | | Parts By Weight | 0 | 2 | 2 | 0 | 0 | 0 | 0 | 0 | 0 |
| (B)Compatibili zer | | Parts By Weight | 0 | 0 | 0 | 1 | 1 | 1 | 1 | 1 | 1 |
| (C) Plasticizer | | Parts By Weight | 20 | 0 | 0 | 20 | 20 | 1 | 1 | 20 | 20 |
| (D)Cosslinking Agent/ Chain Extender | | Parts By Weight | 0 | 0 | 0 | 0.5 | 0.5 | 0.5 | 0.5 | 0.5 | 0.5 |
| (E) Heat Stabilizer | | Parts By Weight | 0.1 | 0 | 0 | 0.1 | 0.1 | 0.1 | 0.1 | 0.1 | 0.1 |
| (F) Processing Aid | | Parts By Weight | 0 | 0 | 0 | 2 | 2 | 2 | 2 | 2 | 2 |
| (G) Inorganic Material | | Parts By Weight | 80 | 80 | 80 | 100 | 100 | 110 | 110 | 110 | 0 |
| (H) Impact Resinforcement Agent | | Parts By Weight | 0 | 0 | 0 | 0 | 0 | 0 | 0 | 0 | 0 |
| (I) Foaming Agent | | Parts By Weight | 0 | 0 | 0 | 0 | 4 | 0 | 4 | 0 | 0 |
| (J) Foaming Aid | | Parts By Weight | 0 | 0 | 0 | 0 | 0.3 | 0 | 0.3 | 0 | 0 |
| (L) Flame Retardant Agent | | Parts By Weight | 0 | 0 | 150 | 0 | 0 | 150 | 150 | 0 | 0 |
| (M) Natural Material Reinforcement Agent | | Parts By Weight | 0 | 0 | 0 | 0 | 0 | 0 | 0 | 0 | 120 |
| Process Temperature | | °C | 110 | 25 | 25 | 130 | 130 | 130 | 130 | 170 | 170 |
| Foam Ratio | | Multiple | 0 | 0 | 0 | 0 | 2 | 0 | 2 | 0 | 0 |
| Heat Resistant Temperature | | °C | 40 | 110 | 110 | 110 | 100 | 100 | 100 | 120 | 120 |
| Heat Resistant Temperature Retaining Time | | Hours | 24 | 24 | 24 | 24 | 24 | 24 | 24 | 24 | 24 |
| Roll Processability | | 1∼5 | 5 | 5 | 4 | 5 | 5 | 4 | 4 | 5 | 5 |
| KSM 7305 | | | X | X | O | X | X | O | O | X | X |
| Smoke Density | | Ds | 20 | 700 | 300 | 40 | 50 | 80 | 100 | 70 | 150 |

As shown in Table 1, the decorating material produced in Comparative example 1 had a heat resistant temperature of 40°C, and thus, was inappropriate for use due to shrinkage thereof above 40°C. Whereas, the decorating materials produced in Examples 1 to 6 according to the present invention had heat resistant temperatures of 100 to 120°C, which indicated excellent characteristics. Each of the PVC decorating materials produced in Comparative examples 2 and 3 had smoke densities of above 300. Whereas, the decorating materials produced in Examples 1 to 6 had smoke densities of 40 to 150, which indicated excellent characteristics as compared with the PVC decorating materials. Each of the compositions prepared in Examples 1 to 6 had a roll processability of 4 or higher on a 5-point scale, which indicated equal or excellent characteristics as compared with the existing materials.

Hereinabove, although the present invention is described by specific matters such as concrete an equipment drawing and the like, exemplary embodiments, and drawings, they are provided only for assisting in the entire understanding of the present invention. Therefore, the present invention is not limited to the exemplary embodiments. Various modifications and changes may be made by those skilled in the art to which the present invention pertains from this description.

Therefore, the present invention should not be limited to the above-described exemplary embodiments, and the following claims as well as all modified equally or equivalently to the claims are intended to fall within the scopes of the invention.

## Claims

1. A polyalkylene carbonate resin composition for producing a decorating material, comprising:
100 parts by weight of a base resin (A) consisting of 1 to 100 wt% of a polyalkylene carbonate resin (a1) and 0 to 99 wt% of a thermoplastic resin (a2);
based on the base resin,
0.01 to 20 parts by weight of a compatibilizer (B) including low-molecular weight poly(alkylene)carbonate or poly(alkylene)carbonate copolymer;
1 to 80 parts by weight of a plasticizer (C), which is one or a mixture of two or more selected from a glycol-based plasticizer, a glycerin-based plasticizer, a neopentyl glycol, diethylene glycol, triethylene glycol, acetylated monoglycerin, epoxidized soybean oil, epoxidized linseed oil, epoxides of other plants, chlorinated hydrocarbon, trimellitate, and a phosphate-base plasticizer;
0.01 to 10 parts by weight of a crosslinking agent, a chain extender, which is one or a mixture of two or more selected from the group consisting of ethylene glycol, 1,4-butanediol, 1,5-pentanediol, 1,6-hexanediol, 1,10-decanediol, 2,2-dimethyl-1,3-propanediol, 1,3-propanediol, trimethylpropanol, bisphenol, polyesterdiol, polyetherdiol, polycaprolactonediol and polycarbonatediol, or a mixture thereof (D);
0.01 to 5 parts by weight of a heat stabilizer (E), which is one or a mixture of two or more selected from the group consisting of phenol-based, hydroquinone-based, benzyl alcohol-based, quinine-based, and amine-based compounds; and
0.001 to 5 parts by weight of a processing aid (F), which is one or more selected from the group consisting of stearic acid, phosphoric acid; phosphorous acids including 3,5-di-t-butyl-4-hydroxybenzylphosphonic acid; phosphorous acid esters including triphenylphosphate, trimethylphosphate, triisodecylphosphate, and tri-(2,4-di-t-butylphenyl)phosphate; phosphorous compounds including hypophosphorous acid and polyphosphoric acid; and acidic phosphoric acid esters including methylphosphate, dibutylphosphate, and monobutylphosphate.

2. The polyalkylene carbonate resin composition for producing a decorating material of claim 1, wherein the base resin contains 20 to 95 wt% of a polyalkylene carbonate resin (a1) and 5 to 80 wt% of a thermoplastic resin (a2).

3. The polyalkylene carbonate resin composition for producing a decorating material of claim 1, wherein the thermoplastic resin (a2) is one or a mixture of two or more selected from the group consisting of polyethyleneterephthalate glycol, polylactic acid, polyvinylacetate, polycaprolactone, polymethylmethacrylate, polyethylene vinylacetate copolymer, polyethylenemethylacrylate glycidylmethacrylate copolymer, polyethylene, polypropylene, and copolyester of Chemical Formula 1 below: 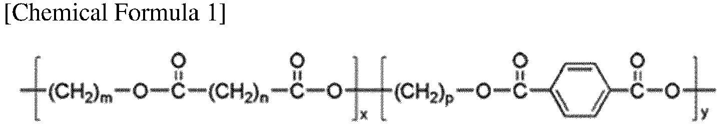 wherein m represents an integer of 2 to 10, n represents an integer of 0 to 18; p represents an integer of 2 to 10, and x and y each represent an integer of 0 to 100.

4. The polyalkylene carbonate resin composition for producing a decorating material of claim 1, wherein the crosslinking agent (D) is one or a mixture of two or more selected from the group consisting of 2,4-tolylene diisocyanate, 2,6-tolylene diisocyanate, 4,4'-diphenylmethane diisocyanate, m-phenylene diisocyanate, xylene diisocyanate, tetramethylene diisocyanate, hexamethylene diisocyanate, lysine diisocyanate, 1,4-cyclohexylene diisocyanate, 4,4'-dicyclohexylmethane diisocyanate, 3,3'-dimethyl-4,4'-biphenylene diisocyanate, N-[p-maleimidophenyl] diisocyanate, 1,6-hexamethylene diisocyanate and isophorone diisocyanate.

5. The polyalkylene carbonate resin composition for producing a decorating material of claim 1, wherein the heat stabilizer (E) is one or more selected from the group consisting of phenothiazine, p-methoxyphenol, cresol, benzhydrol, 2-methoxy-p-hydroquinone, 2,5-di-tert-butylquinone, and diisopropylamine.

6. The polyalkylene carbonate resin composition for producing a decorating material of claim 1, further comprises one or a mixture of two or more selected from 0.01 to 200 parts by weight of an inorganic material (G); 0.1 to 20 parts by weight of an impact reinforcement agent (H); 0.01 to 30 parts by weight of a foaming agent (I); 0.01 to 20 parts by weight of a foaming aid (J); 0.01 to 10 parts by weight of a foam stabilizer (K); 0.01 to 200 parts by weight of a flame retardant agent (L); and 0.1 to 100 parts by weight of a natural material reinforcement agent (M).

7. The polyalkylene carbonate resin composition for producing a decorating material of claim 6, wherein the inorganic material (G) is one or more selected from the group consisting of ceramic particles including titanium dioxide, talc, kaolin, wollastonite, and mica, and metals including titanium (Ti), lead (Pb), barium (Ba), silicon (Si), tin (Sn), calcium (Ca), magnesium (Mg), aluminum (Al), niobium (Nb), zirconium (Zr), iron (Fe), tungsten (W), vanadium (V), manganese (Mn), cobalt (Co), nickel (Ni), zinc (Zn), and rare metal elements, and the impact reinforcement agent(H) is one or more selected from the group consisting of core-shell structure copolymer, chain structure reinforcement agent, thermoplastic olefin elastomer, thermoplastic vulcanizate, thermoplastic polyurethane, and thermoplastic polyester-ether elastomer (TPEE).

8. The polyalkylene carbonate resin composition for producing a decorating material of claim 7, wherein the impact reinforcement agent (H) has a structure where unsaturated monomers selected from the group consisting of alkyl(meth)acrylate, (meth)acrylate, acid anhydride, alkyl or phenyl nucleus-substituted maleimide, and a combination thereof is grafted onto a core made of rubber selected from the group consisting of diene-based rubber, acryl-based rubber, silicon-based rubber, and a combination thereof to form a shell, and the thermoplastic polyester-ether elastomer (TPEE) is thermoplastic polyurethane prepared by reacting glycol of polyester or polyether and diisocyanate, or thermoplastic polyester-ether elastomer (TPEE) prepared by copolymerization of polyester and glycol of polyester or polyether.

9. The polyalkylene carbonate resin composition for producing a decorating material of claim 6, wherein the foaming agent (I) is one or more selected from the group consisting of azodicarbonamide, azodiisobutyronitrile benzenesulfonylhydrazide, 4,4-oxybenzenesulfonyl-semicarbazide, p-toluene sulfonyl semicarbazide, barium azodicarboxylate, N,N'-dimethyl-N,N'-dinitrosoterephthalamide, trihydrazinotriazine, sodium bicarbonate, potassium bicarbonate, ammonium bicarbonate, sodium carbonate, ammonium carbonate, carbon dioxide, nitrogen, argon, water, air, helium, methane, ethane, propane, normal butane, isobutane, normal pentane, isopentane, neopentane, methanol, ethanol, normal propanol, isopropanol, methyl fluoride, perfluoromethane, ethyl fluoride, 1,1-difluoroethane, 1,1,1-trifluoroethane, 1,1,1,2-tetrafluoroethane, 1,1,2,2-tetrafluoroethane, 1,1,1,3,3-pentafluorobutane, 1,1,1,3,3-pentafluoropropane, pentafluoroethane, perfluoroethane, 2,2-difluoropropane, 1,1,1-trifluoropropane, perfluoropropane, dichloropropane, difluoropropane, perfluorobutane, perfluorocyclobutane, methylchloride, methylene chloride, ethyl chloride, 1,1,1-trichloroethane, 1,1-dichloro-1-fluoroethane, 1-chloro-1,1-difluoroethane, chlorodifluoromethane, 1,1-dichloro-2,2,2-trifluoroethane, 1-chloro-1,2,2,2-tetrafluoroethane, trichloromonofluoromethane, dichlrorofluoromethane, dichlorotetrafluoroethane, chloroheptafluoropropane, and dichlorohexafluoropropane, and the foaming aid (J) is one or more selected from the group consisting of surface treated urea, zinc p-toluene sulfinate, or zinc derivatives.

10. The polyalkylene carbonate resin composition for producing a decorating material of claim 6, wherein the foaming stabilizer (K) is one or more selected from the group consisting of organic silicon-based foaming stabilizers, silicon oil, and derivatives thereof, the flame retardant agent (L) is one or more selected from the group consisting of phosphor-based flame retardant agents, nitrogen compound-based flame retardant agents, silicon-based flame retardant agents, inorganic-based flame retardant agents, melamine-based flame retardant agents, and halogen-based flame retardant agents, and the natural material reinforcement agent (M) is one or a mixture of two or more selected from a natural fiber of hemp, flax, ramie, kenaf, or jute, a short cellulose of wood flour, cotton, or wool waste, a pulp cellulose, bamboo, natural dried grass, illite, elvan, jade, loess, clay, tourmaline, kiyoseki, sericite, natural cork, wood flour, rice hull, charcoal, green tea, natural rubber, epoxy-modified natural rubber, natural wormwood, shells, banana fiber, cactus fiber, palm oil and palm oil residues, red ginseng powder, ginseng powder, chaff powder, yellow soil ball, ceramic ball, camphor tree, magnetic powder, natural flavor microcapsules, laurinoxylon, artificial pearls, natural pearls, gold, silver, violet quartz, soil, white quartz, petrifaction and other jewelry and fossils.

11. A polyalkylene carbonate resin decorating material produced by the composition of claim 1.

## Patentansprüche

1. Polyalkylencarbonatharzzusammensetzung zur Herstellung eines Dekorationsmaterials, umfassend:
100 Gewichtsteile eines Basisharzes (A), bestehend aus 1 bis 100 Gew.-% eines Polyalkylencarbonatharzes (a1) und 0 bis 99 Gew.-% eines thermoplastischen Harzes (a2);
bezogen auf das Basisharz,
0,01 bis 20 Gewichtsteile eines Verträglichkeitsvermittlers (B), der niedermolekulares Poly(alkylen)carbonat oder Poly(alkylen)carbonat-Copolymer enthält;
1 bis 80 Gewichtsteile eines Weichmachers (C), bei dem es sich um einen oder eine Mischung von zwei oder mehr Weichmachern handelt, die ausgewählt sind aus einem Weichmacher auf Glykolbasis, einem Weichmacher auf Glyzerinbasis, einem Neopentylglykol, Diethylenglykol, Triethylenglykol, acetyliertem Monoglyzerin, epoxidiertem Sojabohnenöl, epoxidiertem Leinöl, Epoxiden anderer Pflanzen, chloriertem Kohlenwasserstoff, Trimellitat und einem Weichmacher auf Phosphatbasis;
0.01 bis 10 Gewichtsteile eines Vernetzungsmittels, eines Kettenverlängerers, das eines oder eine Mischung von zwei oder mehreren ist, ausgewählt aus der Gruppe bestehend aus Ethylenglykol, 1,4-Butandiol, 1,5-Pentandiol, 1, 6-Hexandiol, 1,10-Decandiol, 2,2-Dimethyl-1,3-propandiol, 1,3-Propandiol, Trimethylpropanol, Bisphenol, Polyesterdiol, Polyetherdiol, Polycaprolactondiol und Polycarbonatdio, I oder eine Mischung davon (D);
0,01 bis 5 Gewichtsteile eines Hitzestabilisators (E), der einer oder eine Mischung von zwei oder mehreren ist, ausgewählt aus der Gruppe bestehend aus Verbindungen auf Phenolbasis, Hydrochinonbasis, Benzylalkoholbasis, Chininbasis und Aminbasis; und
0. 001 bis 5 Gewichtsteile eines Verarbeitungshilfsmittels (F), das eines ist oder mehrere, ausgewählt aus der Gruppe bestehend aus Stearinsäure, Phosphorsäure; phosphorige Säuren einschließlich 3,5-Di-t-butyl-4-hydroxybenzylphosphonsäure; Phosphorige Säureester, einschließlich Triphenylphosphat, Trimethylphosphat, Triisodecylphosphat und Tri-(2,4-di-t-butylphenyl)phosphat; Phosphorverbindungen, einschließlich hypophosphorige Säure und Polyphosphorsäure; und saure Phosphorsäureester, einschließlich Methylphosphat, Dibutylphosphat und Monobutylphosphat.

2. Polyalkylencarbonatharzzusammensetzung zur Herstellung eines Dekorationsmaterials nach Anspruch 1, wobei das Basisharz 20 bis 95 Gew.-% eines Polyalkylencarbonatharzes (a1) und 5 bis 80 Gew.-% eines thermoplastischen Harzes (a2) enthält.

3. Polyalkylencarbonatharzzusammensetzung zur Herstellung eines Dekorationsmaterials nach Anspruch 1, wobei das thermoplastische Harz (a2) eines oder eine Mischung von zwei oder mehreren ist, ausgewählt aus der Gruppe bestehend aus Polyethylenterephthalatglykol, Polymilchsäure, Polyvinylacetat, Polycaprolacton, Polymethylmethacrylat, Polyethylenvinylacetat-Copolymer, Polyethylenmethylacrylat-Glycidylmethacrylat-Copolymer, Polyethylen, Polypropylen und Copolyester der nachstehenden chemischen Formel 1: 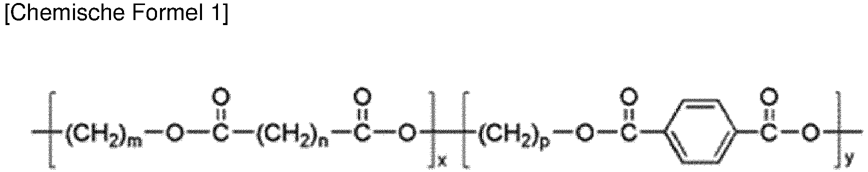 worin m eine ganze Zahl von 2 bis 10 darstellt, n eine ganze Zahl von 0 bis 18 darstellt; p eine ganze Zahl von 2 bis 10 darstellt und x und y jeweils eine ganze Zahl von 0 bis 100 darstellen.

4. Polyalkylencarbonatharzzusammensetzung zur Herstellung eines Dekorationsmaterials nach Anspruch 1, wobei das Vernetzungsmittel (D) eines oder eine Mischung von zwei oder mehreren ist, ausgewählt aus der Gruppe bestehend aus 2,4-Tolylendiisocyanat, 2,6-Tolylendiisocyanat, 4,4'-Diphenylmethandiisocyanat, m-Phenylendiisocyanat, Xyloldiisocyanat, Tetramethylendiisocyanat, Hexamethylendiisocyanat, Lysindiisocyanat, 1,4-Cyclohexylendiisocyanat, 4,4'-Dicyclohexylmethandiisocyanat, 3,3'-Dimethyl-4,4'-biphenylendiisocyanat, N-[p-Maleimidophenyl]diisocyanat, 1,6-Hexamethylendiisocyanat und Isophorondiisocyanat.

5. Polyalkylencarbonatharzzusammensetzung zur Herstellung eines Dekorationsmaterials nach Anspruch 1, wobei der Hitzestabilisator (E) einer ist oder mehrere, ausgewählt aus der Gruppe bestehend aus Phenothiazin, p-Methoxyphenol, Kresol, Benzhydrol, 2-Methoxy-p-hydrochinon, 2,5-Di-tert-butylchinon und Diisopropylamin.

6. Polyalkylencarbonatharzzusammensetzung zur Herstellung eines Dekorationsmaterials nach Anspruch 1, das zudem umfasst eines oder eine Mischung von zwei oder mehreren, ausgewählt aus der Gruppe bestehend aus 0,01 bis 200 Gewichtsteilen eines anorganischen Materials (G); 0,1 bis 20 Gewichtsteilen eines Schlagfestigkeitsverstärkungsmittels (H); 0.01 bis 30 Gewichtsteilen eines Schaumbildners (I); 0,01 bis 20 Gewichtsteilen eines Schäumungshilfsmittels (J); 0,01 bis 10 Gewichtsteilen eines Schaumstabilisators (K); 0,01 bis 200 Gewichtsteilen eines Flammschutzmittels (L); und 0,1 bis 100 Gewichtsteilen eines Verstärkungsmittels aus natürlichem Material (M).

7. Polyalkylencarbonatharzzusammensetzung zur Herstellung eines Dekorationsmaterials nach Anspruch 6, wobei das anorganische Material (G) eines ist oder mehrere, ausgewählt aus der Gruppe bestehend aus Keramikteilchen, einschließlich Titandioxid, Talk, Kaolin, Wollastonit und Glimmer, und Metallen, einschließlich Titan (Ti), Blei (Pb), Barium (Ba), Silizium (Si), Zinn (Sn), Kalzium (Ca), Magnesium (Mg), Aluminium (Al), Niob (Nb), Zirkonium (Zr), Eisen (Fe), Wolfram (W), Vanadium (V), Mangan (Mn), Kobalt (Co), Nickel (Ni), Zink (Zn) und seltene Metallelemente, und das Schlagfestigkeitsverstärkungsmittel (H) eines ist oder mehrere, ausgewählt aus der Gruppe bestehend aus Kern-Hülle-Struktur-Copolymeren, Kettenstruktur-Verstärkungsmitteln, thermoplastischem Olefin-Elastomer, thermoplastischem Vulkanisat, thermoplastischem Polyurethan und thermoplastischem Polyester-Ether-Elastomer (TPEE).

8. Polyalkylencarbonatharzzusammensetzung zur Herstellung eines Dekorationsmaterials nach Anspruch 7, wobei das Schlagfestigkeitsverstärkungsmittel (H) eine Struktur aufweist, bei der ungesättigte Monomere, ausgewählt aus der Gruppe bestehend aus Alkyl(meth)acrylat, (Meth)acrylat, Säureanhydrid, Alkyl- oder Phenylkernsubstituiertem Maleimid, und eine Kombination davon, auf einen Kern aus Kautschuk, ausgewählt aus der Gruppe bestehend aus Kautschuk auf Dienbasis, Kautschuk auf Acrylbasis, Kautschuk auf Siliziumbasis und eine Kombination davon, aufgepfropft sind, um eine Hülle zu bilden, und das thermoplastische Polyesterether-Elastomer (TPEE) thermoplastisches Polyurethan ist, das durch Reaktion von Polyester- oder Polyether-Glykol und Diisocyanat hergestellt wird, oder thermoplastisches Polyesterether-Elastomer (TPEE), das durch Copolymerisation von Polyester und Polyester- oder Polyether-Glykol hergestellt wird.

9. Polyalkylencarbonatharzzusammensetzung zur Herstellung eines Dekorationsmaterials nach Anspruch 6, wobei der Schaumbildner (I) einer ist oder mehrere, ausgewählt aus der Gruppe bestehend aus Azodicarbonamid, Azodiisobutyronitrilbenzolsulfonylhydrazid, 4,4-Oxybenzolsulfonyl-Semicarbazid, p-Toluolsulfonyl-Semicarbazid, Bariumazodicarboxylat, N,N'-Dimethyl-N,N'-dinitrosoterephthalamid, Trihydrazinotriazin, Natriumbikarbonat, Kaliumbikarbonat, Ammoniumbikarbonat, Natriumkarbonat, Ammoniumkarbonat, Kohlendioxid, Stickstoff, Argon, Wasser, Luft, Helium, Methan, Ethan, Propan, normales Butan, Isobutan, normales Pentan, Isopentan, Neopentan, Methanol, Ethanol, normales Propanol, Isopropanol, Methylfluorid, Perfluormethan, Ethylfluorid, 1,1-Difluorethan, 1,1,1-Trifluorethan, 1,1,1,2-Tetrafluorethan, 1,1,2,2-Tetrafluorethan, 1,1,1,3,3-Pentafluorbutan, 1,1,1,3,3-Pentafluorpropan, Pentafluorethan, Perfluorethan, 2,2-Difluorpropan, 1,1,1-Trifluorpropan, Perfluorpropan, Dichlorpropan, Difluorpropan, Perfluorbutan, Perfluorcyclobutan, Methylchlorid, Methylenchlorid, Ethylchlorid, 1,1,1-Trichlorethan, 1,1-Dichlor-1-fluorethan, 1-Chlor-1,1-Difluorethan, Chlordifluormethan, 1,1-Dichlor-2,2,2-trifluorethan, 1-Chlor-1,2,2,2-tetrafluorethan, Trichlormonofluormethan, Dichlrorfluormethan, Dichlortetrafluorethan, Chlorheptafluorpropan und Dichlorhexafluorpropan, und das Schäumungshilfsmittel (J) eines ist oder mehrere, ausgewählt aus der Gruppe bestehend aus oberflächenbehandeltem Harnstoff, Zink-p-Toluolsulfinat oder Zinkderivaten.

10. Polyalkylencarbonatharzzusammensetzung zur Herstellung eines Dekorationsmaterials nach Anspruch 6, wobei der Schaumstabilisator (K) einer ist oder mehrere, ausgewählt aus der Gruppe bestehend aus organischen Schaumstabilisatoren auf Siliziumbasis, Silikonöll und Derivaten davon, das Flammschutzmittel (L) eines ist oder mehrere, ausgewählt aus der Gruppe bestehend aus Flammschutzmitteln auf Phosphorbasis, Flammschutzmittel auf der Basis von Stickstoffverbindungen, Flammschutzmittel auf Siliziumbasis, Flammschutzmittel auf anorganischer Basis, Flammschutzmittel auf Melaminbasis und Flammschutzmittel auf Halogenbasis, und das Verstärkungsmittel aus natürlichem Material (M) eines oder eine Mischung aus zwei oder mehreren ist, ausgewählt aus einer natürlichen Hanffaser, Flachs, Ramie, Kenaf oder Jute, kurze Zellulose aus Holzmehl, Baumwoll- oder Wollabfälle, Zellstoffzellulose, Bambus, natürliches getrocknetes Gras, Illit, Elban, Jade, Löß, Ton, Turmalin, Kiyoseki, Serizit, Naturkork, Holzmehl, Reisschale, Holzkohle, grüner Tee, Naturkautschuk, epoxymodifizierter Naturkautschuk, natürlicher Wermut, Muscheln, Bananenfasern, Kaktusfaser, Palmöl und Palmölreste, rotes Ginsengpulver, Ginsengpulver, Spreu-Pulver, gelbe Erdkugel, Keramikkugel, Kampferbaum, Magnetpulver, natürliche Aromamikrokapseln, Laurinoxylon, Kunstperlen, natürliche Perlen, Gold, Silber, violetter Quarz, Erde, weißer Quarz, Versteinerung und andere Schmucksteine und Fossilien.

11. Polyalkylencarbonatharz-Dekorationsmaterial, hergestellt nach der Zusammensetzung nach Anspruch 1.

## Revendications

1. Composition de résine de carbonate de polyalkylène pour la production d'un matériau de décoration, comprenant :
100 parties en poids d'une résine de base (A) composée de 1 à 100% en poids d'une résine de carbonate de polyalkylène (a1) et de 0 à 99% en poids d'une résine thermoplastique (a2) ;
sur la base de la résine de base,
de 0,01 à 20 parties en poids d'un compatibilisant (B) incluant poly(alkylène) carbonate ou copolymère de poly(alkylène) carbonate à faible poids moléculaire;
de 1 à 8 parties en poids d'un plastifiant (C), qui est l'un ou un mélange de deux ou plusieurs éléments sélectionnés parmi un plastifiant à base de glycol, un plastifiant à base de glycérine, un néopentylglycol, un diéthylène glycol, un triéthylène glycol, une monoglycérine acétylée, de l'huile de soja époxydée, de l'huile de lin époxydée, des époxydes d'autres plantes, un hydrocarbure chloré, du triméllitate, et un plastifiant à base de phosphate ;
de 0,01 à 10 parties en poids d'un agent de réticulation, un allongeur de chaîne, qui est l'un ou un mélange de deux ou plusieurs éléments sélectionnés parmi le groupe composé d'éthylène glycol, butane-1,4-diol, pentane-1,5-diol, hexane-1,6-diol, décane-1,10-diol, 2,2-diméthyl-1,3-propanediol, propane-1,3-diol, triméthylpropanol, bisphénol, polyesterdiol, polyétherdiol, polycaprolactonediol et polycarbonatediol, ou un mélange de ceux-ci (D) ;
de 0,01 à 5 parties en poids d'un stabilisant thermique (E), qui est l'un ou un mélange de deux ou plusieurs éléments parmi le groupe composé de composés à base de phénol, à base de hydroquinone, à base d'alcool benzylique, à base de quinine, et à base d'aminé ; et
de 0,001 à 5 parties en poids d'un produit de traitement (F), qui est l'un ou plusieurs éléments sélectionnés parmi le groupe composé d'acide stéarique, acide phosphorique; acides phosphoreux incluant acide phosphonique 3,5-di-tert-butyl-4-hydroxybenzyle; esters d'acide phosphoreux incluant triphénylphosphate, triméthylphosphate, triisodécylphosphate, et tri-(2,4-di-tert-butylphényl)phosphate; composés phosphoreux incluant de l'acide hypophosphoreux et acide polyphosphorique ; et esters d'acide phosphorique acides incluant méthylphosphate, dibutylphosphate, et monobutylphosphate.

2. Composition de résine de carbonate de polyalkylène pour la production d'un matériau de décoration selon la revendication 1, dans laquelle la résine de base contient de 20 à 95% en poids d'une résine de carbonate de polyalkylène (a1) et de 5 à 80% en poids d'une résine thermoplastique (a2).

3. Composition de résine de carbonate de polyalkylène pour la production d'un matériau de décoration selon la revendication 1, dans laquelle la résine thermoplastique (a2) est l'un ou un mélange de deux ou plusieurs éléments sélectionnés parmi le groupe composé de polyéthylènetéréphthalate glycol, acide polylactique, acétate de polyvinyle, polycaprolactone, polyméthacrylate de méthyle, copolymère de polyéthylène-vinylacétate, copolymère de polyéthylèneméthylacrylate glycidylméthacrylate, polyéthylene, polypropylène, et copolyester selon la Formule chimique 1 suivante : 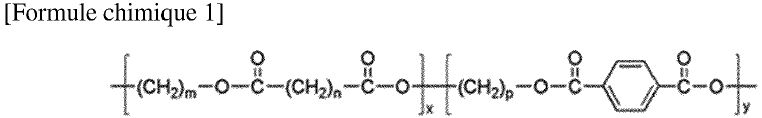 où m représente un nombre entier compris entre 2 et 10, n représente un nombre entier compris entre 0 et 18 ; p représente un nombre entier compris entre 2 et 10, et x et y représentent chacun un nombre entier compris entre 0 et 100.

4. Composition de résine de carbonate de polyalkylène pour la production d'un matériau de décoration selon la revendication 1, dans laquelle l'agent de réticulation (D) est l'un ou un mélange de deux ou plusieurs éléments sélectionnés parmi le groupe composé de 2,4-diisocyanate de tolylène, 2,6-diisocyanate de tolylène, 4,4'-diisocyanate de diphénylméthane, diisocyanate m-phénylène, diisocyanate de xylène, diisocyanate de tétraméthylène, diisocyanate de hexaméthylène, diisocyanate de lysine, diisocyanate 1,4-cyclohéxylène, diisocyanate 4,4'-dicyclohéxylméthane, diisocyanate 3,3'-diméthyl-4,4'-biphénylène, diisocyanate N-[p-maléimidophényl], diisocyanate 1,6-hexaméthylène et diisocyanate d'isophorone.

5. Composition de résine de carbonate de polyalkylène pour la production d'un matériau de décoration selon la revendication 1, dans laquelle le stabilisant thermique (E) est l'un ou plusieurs éléments sélectionnés parmi le groupe composé de phénothiazine, p-méthoxyphénol, crésol, benzhydrol, 2-méthoxy-p-hydroquinone, 2,5-di-tert-butylquinone, et diisopropylamine.

6. Composition de résine de carbonate de polyalkylène pour la production d'un matériau de décoration selon la revendication 1, comprend en outre l'un ou un mélange de deux ou plusieurs éléments sélectionnés de 0,01 à 200 parties en poids d'un matériau inorganique (G) ; de 0,1 à 20 parties en poids d'un agent de renfort d'impact (H) ; de 0,01 à 30 parties en poids d'un agent moussant (I) ; de 0,01 à 20 parties en poids d'un support moussant (J) ; de 0,01 à 10 parties en poids d'un stabilisateur de mousse (K) ; de 0,01 à 200 parties en poids d'un agent ignifuge (L) ; et de 0,1 à 100 parties en poids d'un agent de renfort de matériau naturel (M).

7. Composition de résine de carbonate de polyalkylène pour la production d'un matériau de décoration selon la revendication 6, dans laquelle le matériau inorganique (G) est l'un ou plusieurs éléments sélectionnés parmi le groupe composé de particules de céramique incluant dioxide de titane, talc, kaolin, wollastonite, et mica, et métaux incluant titane (Ti), plomb (Pb), baryum (Ba), silicone (Si), étain (Sn), calcium (Ca), magnesium (Mg), aluminium (Al), niobium (Nb), zirconium (Zr), fer (Fe), tungstène (W), vanadium (V), manganèse (Mn), cobalt (Co), nickel (Ni), zinc (Zn), et éléments de métal rare ; et l'agent de renfort d'impact (H) est l'un ou plusieurs éléments sélectionnés parmi le groupe composé de copolymère de structure de noyau-enveloppe, agent de renfort de structure de chaîne, élastomère oléfinique thermoplastique, vulcanisat thermoplastique, polyuréthane thermoplastique, et élastomère thermoplastique polyester-éther (TPEE).

8. Composition de résine de carbonate de polyalkylène pour la production d'un matériau de décoration selon la revendication 7, dans laquelle l'agent de renfort d'impact (H) a une structure où les monomères insaturés sont sélectionnés du groupe composé de alkyl(méth)acrylate, (méth)acrylate, anhydride d'acide, maléimide à noyau alkyle ou phényle substitué alkyl, et une combinaison de ces derniers est greffée sur un noyau réalisé en caoutchouc sélectionné du groupe composé de caoutchouc à base de diène, caoutchouc à base d'acryle, caoutchouc à base de silicone, et une combinaison de ces derniers pour former une enveloppe, et l'élastomère thermoplastique polyester-éther (TPEE) est polyuréthane thermoplastique préparé par la réaction de glycol de polyester ou polyéther et diisocyanate, ou élastomère thermoplastique polyester-éther (TPEE) préparé par copolymérisation de polyester et glycol de polyester ou polyéther.

9. Composition de résine de carbonate de polyalkylène pour la production d'un matériau de décoration selon la revendication 6, dans laquelle l'agent moussant (I) est l'un ou plusieurs éléments sélectionnés parmi le groupe composé de azodicarbonamide, azobisisobutyronitrile benzenesulfonylhydrazide, 4,4-oxybenzenesulfonyl-semicarbazide, p-toluène sulfonyl semicarbazide, azodicarboxylate de baryum, N,N'-diméthyl-N,N'-dinitrosotéréphthalamide, trihydrazinotriazine, bicarbonate de sodium, bicarbonate de potassium, bicarbonate d'ammonium, carbonate de sodium, carbonate d'ammonium, dioxyde de carbone, azote, argon, eau, air, hélium, méthane, éthane, propane, butane normal, isobutane, pentane normal, isopentane, néopentane, méthanol, éthanol, propanol normal, isopropanol, fluorure de méthyle, perfluorométhane, fluorure d'éthyle, 1,1-difluoroéthane, 1,1,1-trifluoroéthane, 1,1,1,2-tétrafluoroéthane, 1,1,2,2-tétrafluoroéthane, 1,1,1,3,3-pentafluorobutane, 1,1,1,3,3-pentafluoropropane, pentafluoroéthane, perfluoroéthane, 2,2-difluoropropane, 1,1,1-trifluoropropane, perfluoropropane, dichloropropane, difluoropropane, perfluorobutane, perfluorocyclobutane, chlorure de méthyle, chlorure de méthylène, chlorure d'éthyle, 1,1,1-trichloroéthane, 1,1-dichloro-1-fluoroéthane, 1-chloro-1,1-difluoroéthane, chlorodifluorométhane, 1,1-dichloro-2,2,2-trifluoroéthane, 1-chloro-1,2,2,2-tétrafluoroéthane, trichloromonofluorométhane, dichlorofluorométhane, dichlorotétrafluoroéthane, chloroheptafluoropropane, et dichlorohexafluoropropane; et le support moussant (J) est l'un ou plusieurs éléments sélectionnés parmi le groupe composé de urée de surface traitée, sulfinate de p-toluène de zinc, ou dérivés de zinc.

10. Composition de résine de carbonate de polyalkylène pour la production d'un matériau de décoration selon la revendication 6, dans laquelle le stabilisateur de mousse (K) est l'un ou plusieurs éléments sélectionnés parmi le groupe composé de stabilisateurs de mousse à base de silicone organique, huile de silicone, et dérivés de ceux-ci, l'agent ignifuge (L) est l'un ou plusieurs éléments sélectionnés parmi le groupe composé d'agents ignifuges à base de phosphore, agents ignifuges à base de composé d'azote, agents ignifuges à base de silicone, agents ignifuges à base inorganique, agents ignifuges à base de mélamine, et agents ignifuges à base d'halogène, et l'agent de renfort de matériau naturel (M) est l'un ou un mélange de deux ou plusieurs éléments sélectionnés parmi une fibre naturelle de chanvre, lin, ramie, kénaf, ou jute, une courte cellulose de farine de bois, coton, ou résidu de bois, une pâte de cellulose, bambou, herbe séchée naturelle, illite, elvan, jade, lœss, argile, tourmaline, kiyoseki, séricite, liège naturel, farine de bois, balle de riz, charbon de bois, thé vert, caoutchouc naturel, caoutchouc naturel modifié par un époxyde, absinthe naturelle, coquilles, fibre de bananiers, fibre de cactus, huile de palme et résidus d'huile de palme, poudre de ginseng rouge, poudre de ginseng, poudre de paille, boule de terre jaune, boule de céramique, arbre à camphre, poudre magnétique, microcapsules d'arômes naturels, laurinoxylon, perles artificielles, perles naturelles, or, argent, quartz violet, terre, quartz blanc, pétrification et autres bijoux et fossiles.

11. Matériau de décoration de résine de carbonate de polyalkylène produit au moyen de la composition selon la revendication 1.
